# EUROPEAN PATENT SPECIFICATION

(11) **EP 2 053 368 B1**
(45) Date of publication and mention of the grant of the patent: **05.09.2012**
(21) Application number: 09152824.0
(22) Date of filing: 14.07.2006
(51) Int. Cl.: B01F 5/10, B01F 11/00, B01F 15/00, B01F 15/02, G01F 11/12

(54) **Method of minimizing the separation of a two-phase fluid**
Verfahren zur Minimierung der Phasentrennung in einem Zweiphasenfluid
Procédé pour minimiser la séparation des phases dans un fluide biphasé

(30) Priority: 26.07.2005 US 189358
(43) Date of publication of application: 29.04.2009
(62) Divisional of application: 06253702.2
(73) Proprietor: EMD Millipore Corporation, Billerica, MA 01821 (US)
(72) Inventor: Belognia, Brett M., North Andover, MA 01845 (US); Saunders, Robert C., Medford, MA 02155 (US)
(74) Representative: Greenwood, John David

(56) References cited:
- NL-A- 7 901 305
- US-A- 2 764 722
- US-A- 4 276 270
- US-A1- 2003 198 125

## Description

There are various types of dispensing apparatuses for filling parenteral and opthalmic products into vials and containers. One such type is positive displacement fillers. These devices employ a cylinder and piston arrangement, which contacts and dispenses the fluid. Typically, fluid enters the cylinder as the piston is in its upward motion, which creates a vacuum into which the fluid enters through an inlet port. The downward motion of the piston expels the fluid through an outlet port. The process can then be repeated. Other embodiments of positive displacement fillers also exist, such as those using rotary pumps.

While these fillers are popular due to their speed and accuracy, their application is limited, especially in the pharmaceutical field. These devices are very difficult to clean, and typically must be disassembled to be sterilized. Also, since the device actually contacts the fluid, contamination is a constant risk.

Another type of dispensing apparatus is the time/pressure filler. These typically include a fluid chamber that is held under constant pressure. Fluid is dispensed through a discharge line, which is controlled by a pinch type valve. The valve is opened for a precise amount of time to dispense fluid. Since the pressure is held constant, and the time interval is constant, the amount of fluid dispensed should also be constant. However, due to wariances in the equipment and deformation of the discharge tube over time, these systems are less accurate than required for many applications.

A third type of dispensing apparatus is the volumetric dispensing apparatus, as shown in U.S. Patents 5,680,960, 5,480,063, and Publication No. 2005-0029301. These devices measure and dispense a predetermined volume of fluid. These systems are highly accurate and avoid problems of contamination common with positive displacement apparatus, since there are no moving parts in contact with the fluid.

The above mentioned apparatus can all be used to dispense single-phase fluids but all of the apparatus described suffer from one or more significant drawbacks when dispensing solids dispersed in liquid (suspensions) or droplets of one liquid suspended in another liquid (emulsions). Suspension products, such as vaccines or asteroid products may settle when not properly agitated. In the case of emulsions, the two liquids will form droplets when they are agitated but when agitation stops, the droplets may separate into two separate layers. Either of these cases will result in poor content uniformity from one vial tao the next during the final dispensing of the product.

In addition, it can be difficult to clean the process equipment that has contained suspensions or emulsions, resulting in labor intensive cleaning procedures and significant downtime to change from one batch to another. Since the final drug product must remain sterile, rigorous aseptic processes must be adhered to in the reassembly of the dispensing apparatus.

It is therefore an object of the present invention to provide a method that has provision for the mixing of suspension and emulsion products, while maintaining the integrity of the system so that sterility is not negatively impacted. It is also an objective of this invention to provide a method which minimizes the amount of time spent cleaning the delivery system therefore minimizing the amount of downtime required.

US 2,764,722-A discloses a motor driven bidirectional pump and control circuit for use in conjunction with a bidirectional pump in an automatic laundering machine and which has particular application where hot suds are pumped a washing chamber into a reservoir during a first laundering cycle and are returned into the washing chamber the beginning of a second laundering cycle.

The present invention is as claimed in the claims.

In an apparatus useful for performing the method of the invention, a reversing pump is placed between the reservoir and fluid source to periodically or continuously pump fluid into and out of the reservoir.

A single-use format allows for easy installation, pre-sterilization, and easy clean-up which will result in minimal downtime, significant cleaning chemical cost reduction, and greater ensured' sterility. The shape and material of the reservoir are critical in maintaining product uniformity.

### BRIEF DESCRIPTION OF THE DRAWINGS

Figure 1 is a schematic diagram of a dispense cartridge useful with the present invention;
Figure 2 is a schematic diagram showing an embodiment of the dispense system useful with the method of the present invention; and
Figure 3 is a schematic diagram showing a reservoir useful with the method of the present invention.

### DETAILED DESCRIPTION OF THE INVENTION

The dispense system useful with the method of the present invention described here consists of a single-use dispense cartridge and a hardware component onto which the dispense cartridge can be installed. The hardware system is described in the prior art (U.S. Patents 5,680,960 and 5,480,063). The present invention provides for a novel dispense cartridge and method that allows for the accurate dispensing of suspensions or emulsions.

Preferably the fluid reservoir section of the dispense cartridge is a pliable or flexible chamber or bladder, which expands and contracts to maintain a constant internal pressure. Disposable bag-like enclosures are particularly suitable. The tubing section of the dispense cartridge consists of flexible tubing such as silicone, polyethylene, or other elastomer or polymer based tubing attached together with plastic connectors made of materials such as polyethylene, polypropylene, or poly-fluorocarbons.

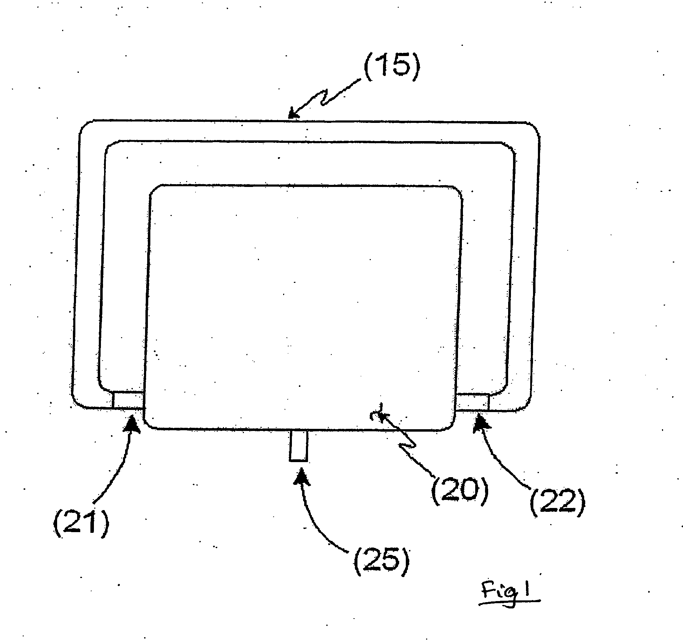

Figure 1 shows one example of a dispense cartridge. An inlet (21) and outlet (22) port on the reservoir (20) are connected with a tubing loop (15). A port (25) on the bottom of the reservoir (20) is provided to allow liquid to move to the tubing assembly used to deliver the product to its final containers (not shown).

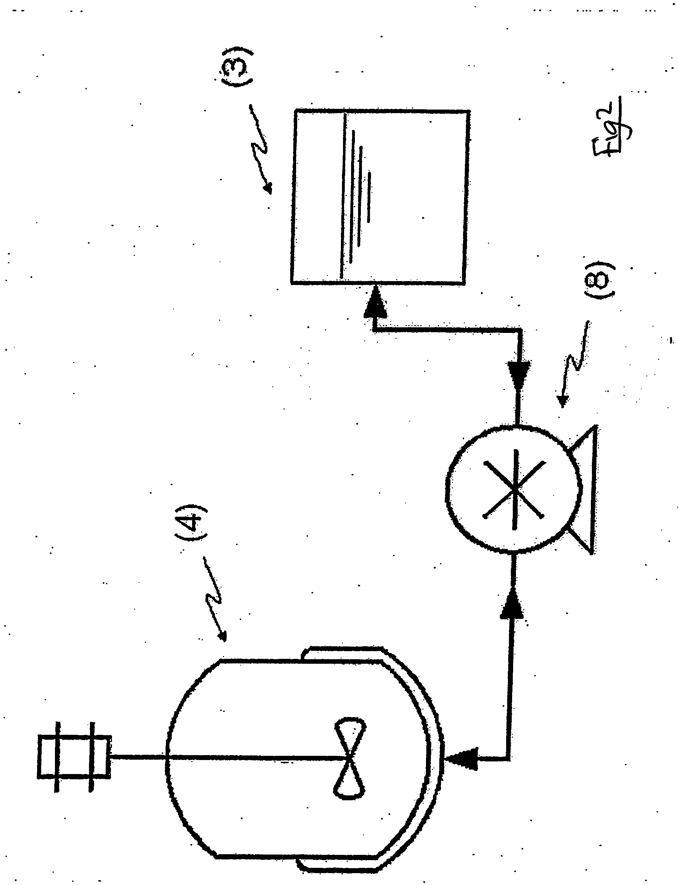

Figure 2 illustrates an arrangement useful for performing the present invention, where an alternating or reversing pump is used to maintain flow and mixing in a reservoir. A single peristaltic pump (8), capable of reversing direction, is in fluid communication with both a bulk fluid supply source (4) and the reservoir of a dispense cartridge (3) through suitable tubing. The fluid level in the reservoir of the dispense cartridge (3) is monitored, such as with a level switch. When the fluid level in the reservoir reaches a predetermined level, the pump (8) remains on but alternates direction so that product is alternately pumped into and out of the reservoir on a periodic or continuous basis. If the level in the reservoir of the dispense cartridge (3) falls below the predetermined level, the pump (8) is placed in a single direction mode to fill the reservoir to the desired level, and is then again placed in the alternating mode to alternately pump product into and out of the reservoir to maintain flow and prevent the solids from-settling.

In the event the withdrawal of fluid from the reservoir of the dispense cartridge (3) does not mix the reservoir contents as efficiently as the filling of the reservoir, the speed of the pump (8) may also alternate in accord with the pump direction so that the time that the pump is withdrawing fluid is less than 50% of the pump cycle time or the cycle time may be minimized.

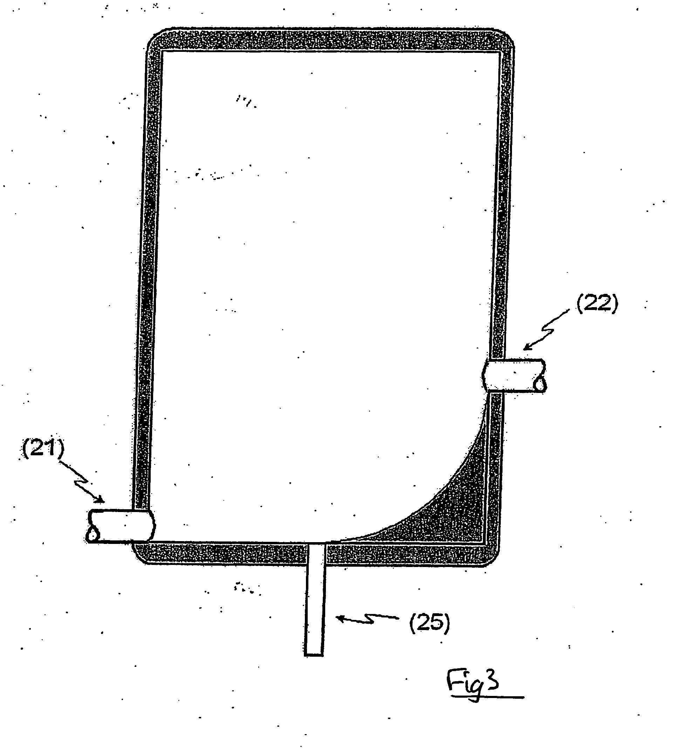

Figure 3 shows a preferred example of the reservoir (20) section of the dispense cartridge which is designed to maximize the fluid motion in the reservoir (20) and minimize any potential stagnation zones. This embodiment shows the inlet (21) and outlet (22) ports of the reservoir (20) located on opposite sides of the reservoir (20). A port (25) on the bottom of the reservoir (20) allows fluid to move to the tubing assembly used to deliver the product to its final containers (not shown).

The following embodiments do not form part of the present invention :
1. A fluid dispensing apparatus for dispensing a predetermined volume of fluid, comprising a reservoir (3), a first pump (1) in fluid communication with a fluid source (4) and said reservoir (3) for pumping fluid into said reservoir (3), and a second pump (2) in fluid communication with said reservoir (3) and a fluid source for pumping fluid from said reservoir (3).
2. The fluid dispensing system of paragraph 1, wherein said first and second pumps (1,2) are peristaltic pumps.
3. The fluid dispensing system of paragraph 1, and either:
   a) wherein said fluid is a suspension, or
   b) wherein said fluid is an emulsion.
4. The fluid dispensing system of paragraph 1, further comprising a fluid level determining device for determining the level of fluid in said reservoir (3), and a controller responsive to said fluid level determining device for controlling the speed of said first and second pumps (1,2) based upon the fluid level in said reservoir (3).
5. The fluid dispensing system of paragraph 1, further comprising a dispense cartridge (3) which houses said reservoir.
6. A fluid dispensing apparatus for dispensing a predetermined volume of fluid, comprising a reservoir (3) having an inlet and an outlet; a pump (5) having an intake in fluid communication with said outlet of said reservoir (3), and an outtake in fluid communication with said inlet of said reservoir (3); and means (6) for regulating the amount of fluid flowing from a fluid source (4) to said pump intake.
7. The fluid dispensing apparatus of paragraph 6, and any of:
   a) wherein said fluid is a suspension;
   b) wherein said fluid is an emulsion;
   c) wherein said means for regulating the amount of fluid comprises a valve (6), in which case, optionally,
      wherein said valve is a pinch valve;
   d) wherein said means for regulating the amount of fluid comprises a pump;
   e) wherein the means for regulating the amount of fluid flowing to said pump intake is responsive to the level of fluid in said reservoir; and
   f) further comprising a dispense cartridge (3) which houses said reservoir.
8. A fluid dispensing apparatus for dispensing a predetermined volume of fluid, comprising a reservoir (3) in fluid communication with a fluid source (4), and a reversing pump (8) in fluid communication with said fluid source (4) and said reservoir (3) for alternately pumping fluid into said reservoir (3) from said fluid source (4) and out of said reservoir (3) to said fluid source (4).
9. The fluid dispensing apparatus of paragraph 8, and any of:
   a) wherein said pump (8) is a peristaltic pump;
   b) wherein said fluid is a suspension;
   c) wherein said fluid is an emulsion;
   d) wherein said reversing pump (8) is responsive to the fluid level in said reservoir (3) such that when said fluid level reaches a predetermined level, said pump (8) alternates direction; and
   e) further comprising a dispense cartridge (3) which houses said reservoir.
10. A method of minimizing in a reservoir the separation of a two-phase fluid, comprising providing a supply source (4) of said fluid in fluid communication with said reservoir (3), pumping said fluid from said source (4) to said reservoir (3) with a first pump (1) and pumping said fluid from said reservoir (3) to said source (4) with a second pump (2).
11. The method of paragraph 10, and either:
   a) wherein said fluid is a suspension; or
   b) wherein said fluid is an emulsion.
12. A method of minimizing in a reservoir the separation of a two-phase fluid, comprising providing a supply source (4) of said fluid, circulating said fluid in said reservoir (3) by pumping a portion thereof out of said reservoir (3) and back into said reservoir (3), and regulating the amount of said fluid in said supply source (4) communicating with said reservoir (3).
13. The method of paragraph 12, and either:
   a) wherein said fluid is a suspension; or
   b) wherein said fluid is an emulsion.
14. A method of minimizing in a reservoir the separation of a two-phase fluid, comprising providing a supply source (4) of said fluid in fluid communication with said reservoir (3), pumping said fluid from said source (4) to said reservoir (3) with a reversing pump (8) operating in a first direction, and pumping said fluid from said reservoir (3), to said source (4) with said reversing pump (8) operating in a second direction.
15. The method of paragraph 14, and either:
   a) wherein said fluid is a suspension; or
   b) wherein said fluid is an emulsion.

## Claims

1. A method of minimizing the separation of a two-phase fluid in a reservoir comprising providing a fluid source (4) of said fluid in fluid communication with said reservoir (3), pumping said fluid from said source (4) to said reservoir (3) with a reversing pump (8) operating in a first direction to fill the reservoir (3) when filled to a level below a predetermined level, and alternately pumping said fluid from said reservoir (3) to said fluid source (4) and out of said fluid source (4) to said reservoir (3) with the reversing pump (8) when the fluid level in said reservoir (3) reaches the predetermined level.

2. The method of claim 1, wherein said fluid is a suspension.

3. The method of claim 1, wherein said fluid is an emulsion.

4. The method of claim 1, wherein said pump (8) is a peristaltic pump.

## Patentansprüche

1. Verfahren zur Minimierung der Phasentrennung in einem Zweiphasenfluid in einem Vorratsbehälter, das das Vorsehen einer Zufuhrquelle (4) des Fluids in Fluidverbindung mit dem Vorratsbehälter (3) und das Pumpen des Fluids aus der Quelle (4) in den Vorratsbehälter (3) mit einer Umsteuerpumpe (8) umfasst, die zum Befüllen des Vorratsbehälters (3) in einer ersten Richtung arbeitet, wenn der im Vorratsbehälter vorhandene Fluidpegel unter dem vorbestimmten Fluidpegel liegt, und wechselweise das Pumpen des Fluids aus dem Vorratsbehälter (3) in die Fluidquelle (4) und aus der Fluidquelle (4) in den Vorratsbehälter (3) mit der Umsteuerpumpe (8), wenn der in dem Vorratsbehälter (3) vorhandene Fluidpegel den vorbestimmten Fluidpegel erreicht.

2. Das Verfahren nach Anspruch 1, wobei das Fluid eine Suspension ist.

3. Das Verfahren nach Anspruch 1, wobei das Fluid eine Emulsion ist.

4. Das Verfahren nach Anspruch 1, wobei die Pumpe (8) eine Schlauchpumpe ist.

## Revendications

1. Procédé de minimisation du phénomène de séparation d'un fluide diphasique dans un réservoir, comprenant la fourniture d'une source de fluide (4) dudit fluide, en communication fluide avec ledit réservoir (3), le pompage dudit fluide depuis ladite source (4) vers ledit réservoir (3) au moyen d'une pompe réversible (8) fonctionnant dans une première direction pour remplir le réservoir (3) lorsqu'il est rempli à un niveau inférieur à un niveau prédéfini, et le pompage alternatif dudit fluide depuis ledit réservoir (3) vers ladite source de fluide (4) et depuis ladite source de fluide (4) vers ledit réservoir (3) au moyen de la pompe à inversion (8) lorsque le niveau de fluide dans ledit réservoir (3) atteint le niveau prédéfini.

2. Procédé selon la revendication 1, dans lequel ledit fluide est une suspension.

3. Procédé selon la revendication 1, dans lequel ledit fluide est une émulsion.

4. Procédé selon la revendication 1, dans lequel ladite pompe (8) est une pompe péristaltique.
